# EUROPEAN PATENT APPLICATION

(11) **EP 3 343 065 A1**
(43) Date of publication of application: **04.07.2018**
(21) Application number: 17209769.3
(22) Date of filing: 21.12.2017
(51) Int. Cl.: F16F 15/31, F04C 29/00, F04C 18/356, H02K 7/02

(54) **INERTIA ADJUSTER AND ROTARY COMPRESSOR**

(30) Priority: 27.12.2016 JP 2016252345
(71) Applicant: MITSUBISHI HEAVY INDUSTRIES THERMAL SYSTEMS, LTD., Tokyo 108-8215 (JP)
(72) Inventor: UNO, Masanari, TOKYO, 108-8215 (JP); SAITO, Takatada, TOKYO, 108-8215 (JP); ESAKI, Ikuo, TOKYO, 108-8215 (JP); OGAWA, Makoto, TOKYO, 108-8215 (JP)
(74) Representative: Cabinet Beau de Loménie

(57) **Abstract**

The purpose of the present invention is to improve the stability of a rotor of a rotary compressor in a low-speed region and improve responsiveness in a high-speed region of the rotor.

A variable inertia adjuster (6) includes: a case (27) which is provided to be rotatable about an axis (A) extending in a vertical direction, and has a tubular case main body (30), a case upper part (31) configured to seal an upper end portion in the axial direction (Da) of the case main body (30), and a case lower part (32) configured to seal a lower end portion in the axial direction of the case main body (30); a plurality of wall parts (28) which protrude upward from an inner surface of the case lower part (32), extend in a radial direction around the axis (A) from the axis (A), and are provided at intervals in a circumferential direction around the axis (A); and a liquid or a particulate object (29) sealed in the case (27). A space is formed between the end portion at outer side in the radial direction of the wall part (28) and the case main body (30), and at least a part of the inner surface of the case lower part (32) has a conical surface shape which decreases in diameter toward the lower side in the axial direction.

## Description

### BACKGROUND OF THE INVENTION

### Field of the Invention

The present invention relates to an inertia adjuster and a rotary compressor.

### Description of Related Art

Conventionally, a rotary compressor, which is used in an air conditioner, a refrigerator or the like to compress a fluid (refrigerant gas), is known. A rotary compressor includes a compression mechanism which has a piston rotor eccentrically attached to a rotary shaft, and a cylinder with a piston rotor disposed therein. In the compression mechanism of the rotary compressor, the refrigerant gas is drawn into a cylinder via a suction pipe connected to a side wall of the cylinder, and the refrigerant gas is compressed in accordance with the eccentric rotation of the piston rotor (see, for example, Patent Document 1).

In order to minimize vibration of a rotor (rotary shaft) of an electric motor or stabilize the rotational speed of the rotor in rotary compressors, attempts have been made to add inertia to the rotor by, for example, using a flywheel (see, for example, Patent Document 2).

### [Patent Documents]

[Patent Document 1] Japanese Unexamined Patent Application, First Publication No. H11-107961
[Patent Document 2] Japanese Unexamined Patent Application, First Publication No. 2002-130171
[Patent Document 3] Japanese Unexamined Patent Application, First Publication No. S59-1838

### SUMMARY OF THE INVENTION

Incidentally, the aforementioned conventional rotary compressor has characteristics in which the torque fluctuates due to the structure and the efficiency tends to decrease at the time of low-speed operation due to fluctuation of the rotational speed. Therefore, stability in the low-speed region is required, and a method is known in which a flywheel is provided to increase the inertia of a rotary shaft system and ensure stability in a low-speed region. However, in the high-rotational speed region of the rotor, in a case where the flywheel is provided, there is a problem that the responsiveness deteriorates when the rotational speed of the rotor is changed.

Further, Patent Document 3 discloses a flywheel having a function of increasing the inertia particularly in a high-speed region by utilizing the centrifugal force of a fluid. However, the flywheel disclosed in Patent Document 3 does not take into account the stability in the low-speed region or the responsiveness in the high-speed region.

An object of the present invention is to provide a variable inertia adjuster and a rotary compressor capable of simultaneously improving the stability of the speed in the low-speed region of the rotary compressor and improving the responsiveness in the high-speed region.

According to a first aspect of the present invention, the variable inertia adjuster includes a case which is provided to be rotatable about an axis extending in a vertical direction, and has a tubular case main body, a case upper part configured to seal an upper end portion in the axial direction of the case main body, and a case lower part configured to seal a lower end portion in the axial direction of the case main body; a plurality of wall parts which protrude upward from an inner surface of the case lower part, extend in a radial direction around the axis from the axis, and are provided at intervals in a circumferential direction around the axis; and a liquid or a particulate material sealed into the case. A space is formed between the end portion at outer side in the radial direction of the wall part and the case main body, and at least a part of the inner surface of the case lower part has a conical surface shape which decreases in diameter toward the lower side in the axial direction.

With such a configuration, it is possible to improve the stability of the speed fluctuation in the low-speed region of the rotating part of the rotary machine, and to improve the responsiveness in the high-speed region.

In the above-mentioned variable inertia adjuster, the inner surface of the case lower part has a first inclined part and a second inclined part, the first inclined part has a conical surface shape which decreases in diameter toward the lower side in the axial direction, and the second inclined part is located on the outer side in the radial direction of the first inclined part, and has an inclination angle to a horizontal surface closer to a horizontal state than the first inclined part.

According to such a configuration, by appropriately adjusting the inclination angle of the first inclined part and the inclination angle of the second inclined part, it is possible to adjust the ease of movement of the liquid or the particulate object in the radial direction.

According to a second aspect of the present invention, there is provided a rotary compressor which includes a rotary shaft extending along an axis; a bearing which rotatably supports the rotary shaft; an electric motor which rotationally drives the rotary shaft; a compression mechanism which has a piston rotor rotating eccentrically with respect to the rotary shaft, and a cylinder having a compression chamber to accommodate the piston rotor in the compression chamber; and an inertia adjuster according to the first aspect or the second aspect.

With such a configuration, it is possible to improve the stability of the speed fluctuation in the low-speed region of the rotary compressor and to improve the responsiveness in the high-speed region of the rotary compressor.

According to the present invention, it is possible to improve the stability of the speed fluctuation in the low-speed region of the rotating part of the rotary machine and to improve the responsiveness in the high-speed region.

### BRIEF DESCRIPTION OF THE DRAWINGS

FIG. 1 is a longitudinal sectional view of a rotary compressor according to a first embodiment of the present invention.
FIG. 2 is a cross-sectional view of the rotary compressor according to the first embodiment of the present invention.
FIG. 3 is a perspective view of a variable inertia adjuster according to the first embodiment of the present invention.
FIG. 4 is a longitudinal sectional view of the variable inertia adjuster according to the first embodiment of the present invention.
FIG. 5 is a cross-sectional view of the variable inertia adjuster according to the first embodiment of the present invention, taken in a direction of arrows V-V of FIG. 4.
FIG. 6 is a diagram showing the operation of the variable inertia adjuster according to the first embodiment of the present invention, and showing a state of oil in a case where the rotational speed of the rotary compressor is in a low-speed region.
FIG. 7 is a diagram showing the operation of the variable inertia adjuster according to the first embodiment of the present invention, and showing a state of oil in a case where the rotational speed of the rotary compressor is in a middle-speed region.
FIG. 8 is a diagram showing the operation of the variable inertia adjuster according to the first embodiment of the present invention, and showing a state of oil in a case where the rotational speed of the rotary compressor is in a high-speed region.
FIG. 9 is a longitudinal sectional view of a variable inertia adjuster according to a second embodiment of the present invention.

### DETAILED DESCRIPTION OF THE INVENTION

### [First Embodiment]

Hereinafter, a rotary compressor according to a first embodiment of the present invention will be described in detail with reference to the drawings.

The rotary compressor is used, for example, in an air conditioner, a refrigerator, and the like, and is connected to a refrigerant circuit (not shown). That is, the rotary compressor is a machine that is incorporated in a refrigerant circuit having a condenser, an expansion valve, an evaporator and the like to compress the refrigerant gas flowing in the piping of the refrigerant circuit.

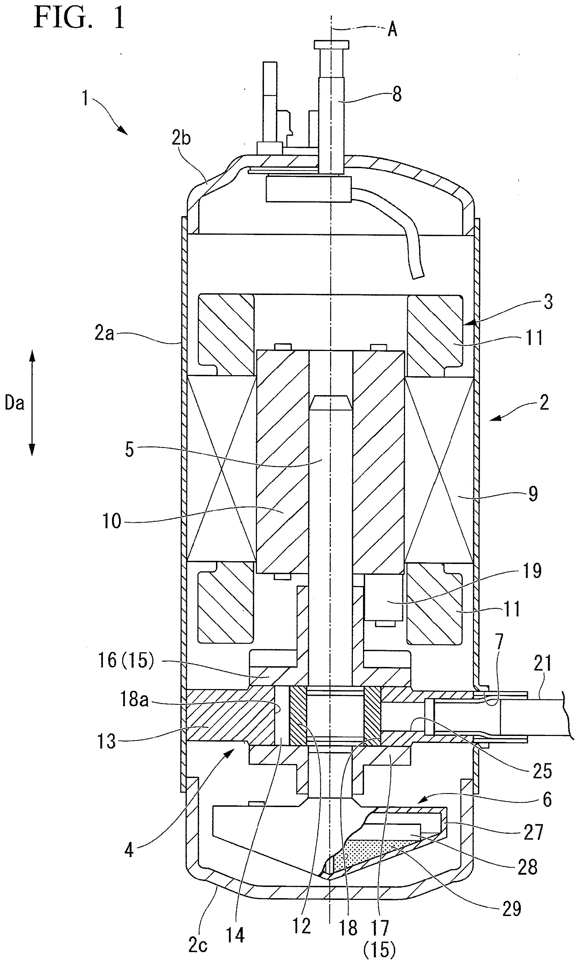

As shown in FIG. 1, a rotary compressor 1 (hereinafter simply referred to as a compressor 1) of the present embodiment has a cylindrical housing 2, a rotary shaft 5 extending along an axis A, a bearing 15 which rotatably supports the rotary shaft 5, an electric motor 3 which rotationally drives the rotary shaft 5, a compression mechanism 4 driven by the electric motor 3 inside the housing 2, and a variable inertia adjuster 6 connected to the rotary shaft 5.

The rotary shaft 5, the bearing 15, the electric motor 3, the compression mechanism 4, and the variable inertia adjuster 6 are hermetically sealed inside the housing 2.

The housing 2 has a tubular body 2a, an upper cover 2b welded to an upper end of the body 2a, and a lower cover 2c welded to a lower end of the body 2a.

An opening portion 7 is formed in the body 2a. A suction pipe 21 which is a pipe for suctioning the refrigerant gas into the compression mechanism 4 via an accumulator (not shown) is connected to the opening portion 7. A discharge pipe 8 which discharges the compressed refrigerant gas is provided in the upper cover 2b.

The accumulator separates the refrigerant gas supplied to the compressor 1 into gas and liquid. The accumulator has the suction pipe 21 which suctions the refrigerant gas in the accumulator into the compressor 1. A distal end of the suction pipe 21 is connected to a suction port 25 of a cylinder 13 to be described later.

The electric motor 3 includes a stator 9 fixed to an inner circumferential surface of the housing 2, and a rotor 10 which is disposed inside the stator 9 and rotates by energization to the stator 9. At each of the upper end and the lower end of the stator 9, a coil end 11, which is an end portion of a coil bundle, is provided.

A rotary shaft 5 extending along an axial direction Da is connected to the rotor 10. The rotational driving force of the electric motor 3 is output to the rotary shaft 5 fixed to the rotor 10. The rotary shaft 5 is disposed along a vertical direction and extends downward from the rotor 10.

The compression mechanism 4 includes a piston rotor 12 which rotates eccentrically with respect to the rotary shaft 5, a cylinder 13 having a compression chamber 14 to accommodate the piston rotor 12 in the compression chamber 14, and an upper bearing 16 and a lower bearing 17 which are bearings 15 for supporting the rotary shaft 5 in a rotatable manner. The compression mechanism 4 compresses the refrigerant gas, by gradually decreasing the volume of the compression chamber 14 formed in the cylinder 13 with the rotation of the piston rotor 12.

The cylinder 13 is a plate-like member having a thickness in the axial direction Da, and has a circular through-hole 18 extending in the axial direction Da. A central axis of the through-hole 18 coincides with the axis A of the rotary shaft 5. The cylinder 13 has an inner circumferential surface 18a of a cylindrical surface shape.

An internal space of the inner circumferential surface 18a of the cylinder 13 is sealed by the upper bearing 16 and the lower bearing 17 to form the compression chamber 14.

A balance weight 19 (a counter weight) is attached to the rotor 10 of the electric motor 3 in order to suppress deflection of the axial center of the rotor 10 when the electric motor 3 is driven. In order to cancel out the centrifugal force generated by the high-speed rotation of the piston rotor 12 which is the eccentric rotating part of the compression mechanism 4, the balance weight 19, which generates the centrifugal force in the direction opposite to the piston rotor 12, is attached to the rotor 10.

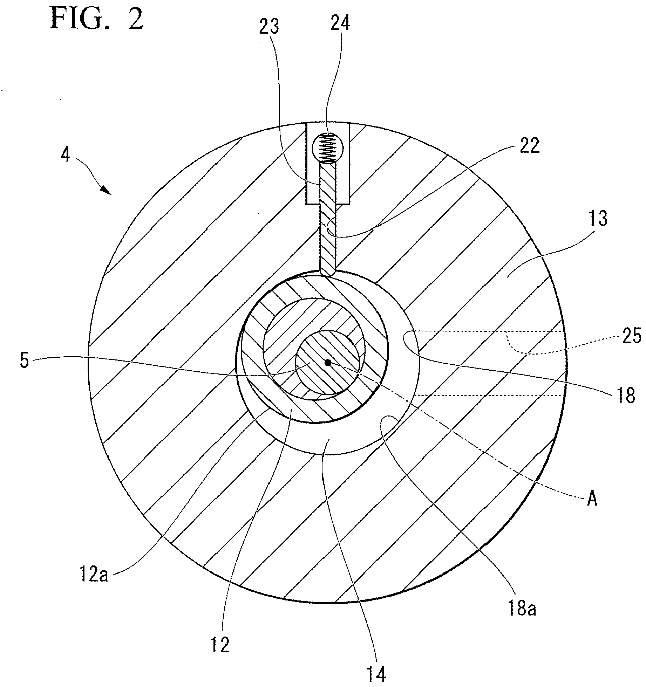

As shown in FIG. 2, the cylinder 13 has a slot 22 formed at one position in the circumferential direction. A plate-like blade 23 is inserted into the slot 22.

A proximal end of the blade 23 located on the radially outer side is pressed radially inward by a coil spring 24. A distal end of the blade 23 is always pressed against the outer circumferential surface of the piston rotor 12, by the pressing force of the coil spring 24 and the pressure of the refrigerant gas in the housing 2. The blade 23 reciprocally moves with respect to the interior of the cylinder 13 along the slot 22, following the movement of the piston rotor 12.

The blade 23 partitions the compression chamber 14, which is a crescent-shaped space formed between an inner circumferential surface 18a of the cylinder 13 and an outer circumferential surface 12a of the piston rotor 12, into two spaces in the circumferential direction. The volume of the two spaces is reduced or enlarged in accordance with the rotation angle of the piston rotor 12.

A suction port 25 connected to the suction pipe 21 is formed in the cylinder 13. The suction port 25 is formed from the outer circumferential surface to the inner circumferential surface 18a of the cylinder 13.

A discharge hole (not shown) which discharges the refrigerant is formed in the cylinder 13. A reed valve (not shown) is provided in the discharge hole. When the pressure of the compressed refrigerant gas reaches a predetermined value, the refrigerant gas is discharged to the outside of the cylinder 13 by pushing and opening the reed valve.

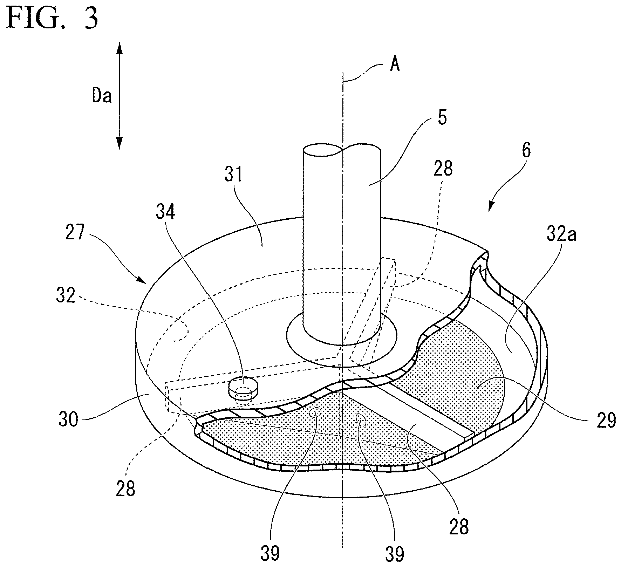

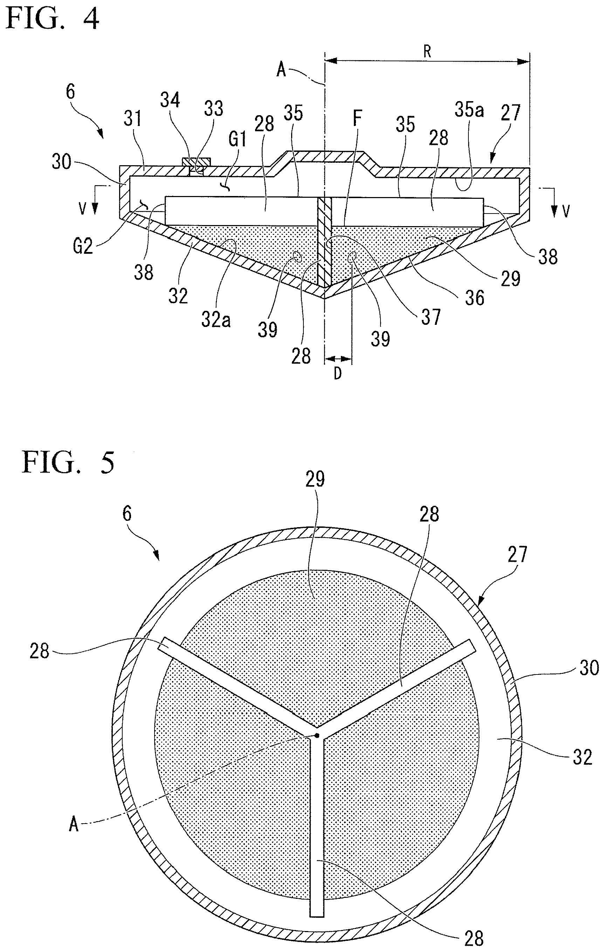

As shown in FIGS. 3, 4, and 5, the variable inertia adjuster 6 includes a cylindrical case 27, three wall parts 28 provided inside the case 27, and an oil 29 sealed inside the case 27.

The case 27 of the variable inertia adjuster 6 and the lower end portion of the rotary shaft 5 are joined by welding so that the rotary shaft 5 and the case 27 are coaxial with each other. A method of joining the variable inertia adjuster 6 and the case 27 is not limited thereto. For example, a flange may be formed at the lower end portion of the rotary shaft 5, and the flange may be fixed to the case 27 of the variable inertia adjuster 6 with screws.

The case 27 has a cylindrical case main body 30, a case upper part 31 for sealing the upper end portion in the axial direction Da of the case main body 30, and a case lower part 32 for sealing the lower end portion in the axial direction Da of the case main body 30. Further, the case main body 30 is not limited to a cylindrical shape, and may have, for example, a square tubular shape having a polygonal cross-sectional shape.

The case upper part 31 is formed so that a main surface of the case upper part 31 is orthogonal to the axis A. An injection hole 33 for injecting the oil 29 into the case 27 is formed in the case upper part 31. The injection hole 33 is sealed by a plug 34.

The case lower part 32 has a conical surface shape in which an inner surface 32a (upper surface) of the case lower part 32 decreases in diameter toward the lower side in the axial direction Da. The case lower part 32 is formed such that a circumferential edge part of the case lower part 32 is highest and a central part of the case lower part 32 is lowest. The case lower part 32 has a conical shape in which the lower part is convex and its apex is disposed on the axis A.

The wall part 28 is a plate-like part in which the main surface of the wall part 28 is orthogonal to the circumferential direction and extends from the axis A in the radial direction. The wall part 28 protrudes upward from the inner surface 32a of the case lower part 32.

An upper side 35 of the wall part 28 extends in the horizontal direction, and a lower side 36 of the wall part 28 is connected to the inner surface 32a of the case lower part 32. The three wall parts 28 are connected by an internal side 37 which is a side on the radially inner side of the wall part 28. A gap G1 is formed between the upper side 35 of the wall part 28 and the lower surface 35a of the case upper part 31.

An external side 38, which is a side on the radially outer side of the wall part 28, extends in the axial direction Da. A space G2 is formed between the external side 38 of the wall part 28 and the inner circumferential surface of the case main body 30. The volume of the space G2 can be appropriately changed in accordance with the quantity of the oil 29 and the rotational speed of the rotary compressor 1 (the electric motor 3).

The three wall parts 28 are disposed at equal intervals in the circumferential direction. An angle formed by circumferentially adjacent wall parts 28 is 120°.

The number of the wall parts 28 is not limited to three. Two or more wall parts 28 may be provided. Further, it is not necessary to provide the wall parts 28 at equal intervals in the circumferential direction.

In the wall part 28, an oil circulation hole 39 for equalizing a liquid level F of the oil 29 is formed. The oil circulation hole 39 is formed at a position lower than the liquid level F of the oil 29 when the rotary compressor 1 is stopped. The oil circulation hole 39 is formed in the vicinity of the axis A. Specifically, assuming that the radius of the case 27 is R, a distance D from the axis A to the center of the oil circulation hole 39 is formed to be in a range from R/10 to R/5. Further, the area of the oil circulation hole 39 is 1/10 or less of the area of the wall part 28.

Further, the liquid sealed in the case 27 is not limited to the oil 29. For example, a liquid such as water may be used. In addition to a liquid, a particulate object such as sand or a collection of small-diameter spherical objects (beads) may be enclosed inside the case 27.

Next, the dimensions of the variable inertia adjuster 6 and the quantity of the oil 29 will be described.

The dimensions of the variable inertia adjuster 6 and the quantity of the oil 29 are set on the basis of the rotational speed of the rotary compressor 1 (the rotational speed of the rotor of the electric motor 3).

Hereinafter, an example will be described assuming that the rated rotational speed of the rotary compressor 1 is 100 rps, the low-speed region is 0 rps to 10 rps, the medium-speed region is 10 rps to 90 rps, and the high-speed region is 90 rps to 100 rps.

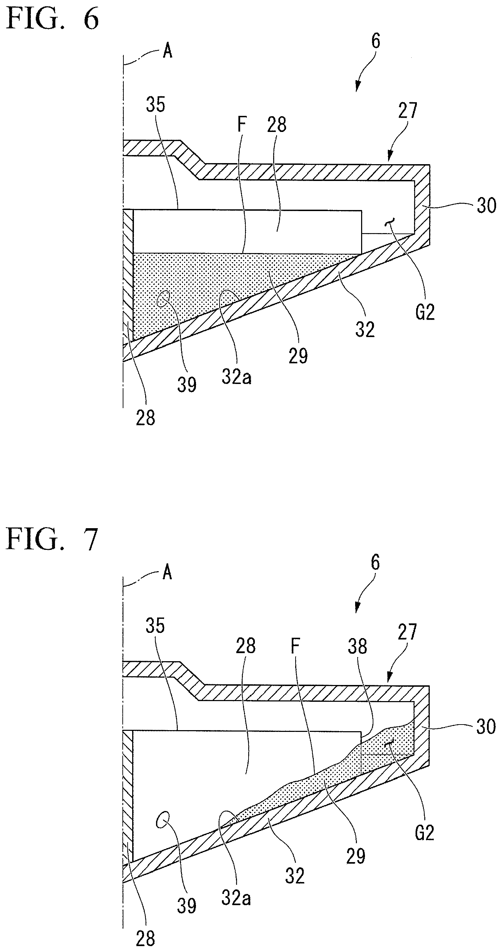

As shown in FIG. 6, the dimensions of the wall part 28 and the quantity of the oil 29 are set such that the liquid level F of the oil 29 is lower than the upper side 35 of the wall part 28 in the low-speed region of the rotary compressor 1.

Further, the dimensions of the wall part 28 and the quantity of the oil 29 are set such that the oil 29 does not reach the space G2 in the low-speed region of the rotary compressor 1.

Further, as long as most (for example, 90%) of the oil 29 and the wall part 28 overlap each other when viewed from the circumferential direction, the liquid level F of the oil 29 may be higher than the upper side 35. Similarly, as long as most of the oil 29 and the wall part 28 overlap each other when viewed from the circumferential direction, the oil 29 may reach the space G2.

As shown in FIG. 7, the dimensions of the wall part 28 and the quantity of the oil 29 are set such that, in the middle-speed region of the rotary compressor 1, the liquid level F of the oil 29 is inclined by the centrifugal force, and about half of the oil 29 moves outward in the radial direction from the external side 38 of the wall part 28.

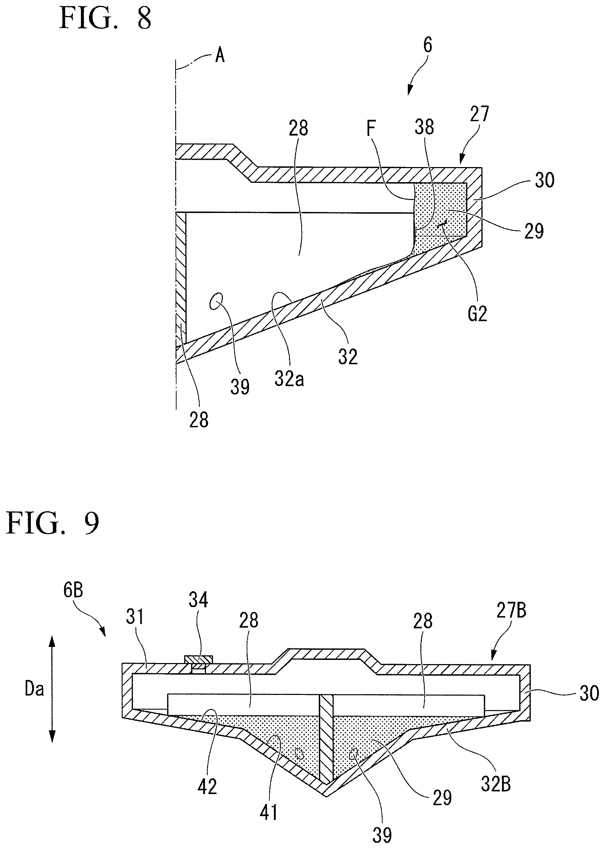

As shown in FIG. 8, the dimensions of the wall part 28 and the quantity of the oil 29 are set such that the liquid level F of the oil 29 is substantially vertical due to the centrifugal force in the high-speed region of the rotary compressor 1, and 90% or more of the oil 29 moves outward in the radial direction from the external side 38 of the wall part 28.

In such a compressor 1, the refrigerant gas is taken into the accumulator from the suction port of the accumulator, the refrigerant gas is separated into gas and liquid in the accumulator, and the gas phase is supplied from the suction pipe 21 to the compression chamber 14 which is the internal space of the cylinder 13 via the suction port 25 of the cylinder 13.

Further, due to the eccentric motion of the piston rotor 12, the volume of the compression chamber 14 gradually decreases and the refrigerant gas is compressed. When the pressure of the compressed refrigerant gas increases, the refrigerant gas pushes and opens the reed valve and is discharged to the outside of the cylinder 13. The discharged refrigerant gas is discharged from a discharge pipe 8 provided at the upper part of the housing 2 to an external piping (not shown).

Next, the operation of the variable inertia adjuster 6 will be described.

When the rotary compressor 1 is started and the rotor of the electric motor 3 rotates, the variable inertia adjuster 6 connected to the rotary shaft 5 also rotates.

As shown in FIG. 6, in the low-speed region of the rotary compressor 1, the liquid level F of the oil 29 is parallel to a substantially horizontal surface (a surface orthogonal to the axis A), and most of the oil 29 is present on the radially inner side of the external side 38 of the wall part 28. In other words, the oil 29 does not move to the adjacent space via the wall part 28.

As a result, the oil 29 rotates together with the wall part 28. In other words, the rotational speed of the rotary compressor 1 is substantially the same as the rotational speed of the oil 29.

In this way, the inertia moment of the variable inertia adjuster 6 increases, and when the rotary compressor 1 is operated in the low-speed region, it is possible to improve the stability of the rotational speed of the rotary compressor 1. In addition, when the speed of the rotary compressor 1 is increased from the stopped state, it is difficult for the rotational speed of the rotary compressor 1 to increase.

As shown in FIG. 7, when the rotational speed of the rotary compressor 1 is further increased to the middle-speed region, the liquid level F of the oil 29 has an angle with respect to the horizontal plane, and about half of the oil 29 flows into the space G2. As a result, about half of the oil 29 can rotate independently with respect to the case 27 and the wall part 28, and the rotational speed of the rotary compressor 1 easily increases.

As shown in FIG. 8, when the rotational speed of the rotor of the rotary compressor 1 is further increased to the high-speed region, the liquid level F of the oil 29 becomes close to a vertical state, and most of the oil 29 flows into the space G2. Most of the oil 29 can rotate independently with respect to the wall part 28. In other words, the rotational speed of the rotary compressor 1 and the rotational speed of the oil 29 are different from each other.

As a result, the inertia moment of the variable inertia adjuster 6 decreases, and when changing the rotational speed of the rotary compressor 1, the reaction speed can be improved. That is, as the rotational speed of the rotary compressor 1 increases, the quantity of the oil 29 required to change the speed decreases. Thus, the rotational speed can be easily changed.

In addition, when the rotational speed of the rotary compressor 1 is slow, the quantity of the oil 29 required to be stopped increases. Thus, it is difficult for the rotational speed to decrease.

According to the above embodiment, it is possible to improve the stability of the rotary compressor 1 in the low-speed region and to improve the responsiveness in the high-speed region of the rotary compressor 1.

Further, since the oil circulation hole 39 of the wall part 28 is formed, the liquid level F of the oil 29 can be made uniform.

Further, in the above embodiment, the entire surface of the inner surface 32a of the case lower part 32 is reduced in diameter toward the lower side in the axial direction Da. However, the present invention is not limited thereto, and at least a part of the inner surface 32a of the case lower part 32 may be reduced in diameter toward the lower side in the axial direction Da. For example, the central portion of the case lower part 32 may have a planar shape along the horizontal direction.

Further, in the above embodiment, the variable inertia adjuster 6 is applied to a rotary compressor, but the present invention is not limited thereto. The variable inertia adjuster 6 is applicable to rotary machines such as windmills and engines.

The above-described embodiment shows the configuration in which the gap G1 is formed between the upper side 35 of the wall part 28 and the case upper part 31. However, the present invention is not limited thereto, and the upper side 35 of the wall part 28 may be connected to the case upper part 31.

### [Second Embodiment]

Hereinafter, a rotary compressor according to a second embodiment of the present invention will be described in detail with reference to the drawings. In this embodiment, differences from the above-described first embodiment will be mainly described, and description of similar parts will be omitted.

As shown in FIG. 9, in a case 27B of a variable inertia adjuster 6B of the present embodiment, a shape of a case lower part 32B is different from the shape of the case lower part 32 of the first embodiment.

The inner surface of the case lower part 32B of the present embodiment has a first inclined part 41 having a conical surface shape which decreases in diameter toward the lower side in the axial direction Da, and a second inclined part 42 which is located on the outer side in the radial direction of the first inclined part 41 and has an inclination angle to the horizontal direction closer to the horizontal state than the first inclined part 41.

In the rotary compressor having the above configuration, the ease of movement of the oil 29 in the radial direction can be adjusted by appropriately adjusting the inclination angle of the first inclined part 41 and the inclination angle of the second inclined part 42.

Although the embodiments of the present invention have been described in detail with reference to the drawings, the specific configuration is not limited to this embodiment, and design changes and the like within the scope of the present invention are also included.

For example, in the rotary compressor of the above embodiment, the variable inertia adjuster 6 is connected to the lower part of the rotary shaft 5, but the variable inertia adjuster 6 may be connected to the upper part of the rotary shaft 5.

### [Industrial Applicability]

According to the aforementioned variable inertia adjuster and rotary compressor, it is possible to simultaneously improve the stability of the speed in the low-speed region of the rotary compressor and to improve the responsiveness in the high-speed region.

While preferred embodiments of the invention have been described and shown above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

### EXPLANATION OF REFERENCES

1 Rotary compressor
2 Housing
2a Body
2b Upper cover
2c Lower cover
3 Electric motor
4 Compression mechanism
5 Rotary shaft
6 Variable inertia adjuster
7 Opening portion
8 Discharge pipe
9 Stator
10 Rotor
11 Coil end
12 Piston rotor
12a Outer circumferential surface
13 Cylinder
14 Compression chamber
15 Bearing
16 Upper bearing
17 Lower bearing
8 Through-hole
8a Inner circumferential surface
19 Balance weight
21 Suction pipe
22 Slot
23 Blade
24 Coil spring
25 Suction port
27 Case
28 Wall part
29 Oil (liquid or powder)
30 Case main body
31 Case upper part
32 Case lower part
32a Inner surface
33 Injection hole
34 Plug
35 Upper side
36 Lower side
37 Inner side
38 Outer side
39 Oil circulation hole
41 First inclined part
42 Second inclined part
A Axis
F Liquid level
G1 Gap
G2 Space

## Claims

1. A variable inertia adjuster (6) comprising:
a case (27) which is provided to be rotatable about an axis (A) extending in a vertical direction, and has a tubular case main body (30), a case upper part (31) configured to seal an upper end portion in the axial direction of the case main body (30), and a case lower part (32) configured to seal a lower end portion in the axial direction of the case main body;
a plurality of wall parts (28) which protrude upward from an inner surface of the case lower part (32), extend in a radial direction around the axis (A) from the axis, and are provided at intervals in a circumferential direction around the axis; and
a liquid or a particulate object (29) sealed in the case,
wherein a space (G2) is formed between the end portion at outer side in the radial direction of the wall part (28) and the case main body (30), and
at least a part of the inner surface of the case lower part (32) has a conical surface shape which decreases in diameter toward the lower side in the axial direction.

2. The variable inertia adjuster (6) according to claim 1, wherein the inner surface of the case lower part (32) has a first inclined part (41) and a second inclined part (42), and
the first inclined part (41) has a conical surface shape which decreases in diameter toward the lower side in the axial direction, and the second inclined part (42) is located on the outer side in the radial direction of the first inclined part (41), and has an inclination angle to a horizontal surface closer to a horizontal state than the first inclined part (41).

3. A rotary compressor (1) comprising:
a rotary shaft (5) extending along an axis;
a bearing (15) which rotatably supports the rotary shaft (5);
an electric motor (3) which rotationally drives the rotary shaft (5);
a compression mechanism (4) which has a piston rotor (12) rotating eccentrically with respect to the rotary shaft (5), and a cylinder (13) having a compression chamber (14) to accommodate the piston rotor (12) in the compression chamber (14); and
the variable inertia adjuster (6) according to claim 1 or 2.
